# EUROPEAN PATENT SPECIFICATION

(11) **EP 2 249 601 B1**
(45) Date of publication and mention of the grant of the patent: **21.12.2016**
(21) Application number: 10161631.6
(22) Date of filing: 30.04.2010
(51) Int. Cl.: H04W 36/00

(54) **Handover method, mobile terminal and base station**
Weiterreichungsverfahren, mobiles Endgerät und Basisstation
Procédé de transfert, terminal mobile et station de base

(30) Priority: 07.05.2009 CN 200910136317; 16.03.2010 CN 201010127164
(43) Date of publication of application: 10.11.2010
(73) Proprietor: NTT DoCoMo, Inc., Chiyoda-ku Tokyo 100-6150 (JP)
(72) Inventor: Li, Mingju, 100190 Beijing (CN); She, Xiaoming, 100190 Beijing (CN); Chen, Lan, 100190 Beijing (CN)
(74) Representative: Zimmermann, Tankred Klaus

(56) References cited:
- EP-A2- 2 031 924
- WO-A1-2007/116227
- WO-A2-2006/049456
- WO-A2-2007/149509
- CA-A1- 2 664 633
- US-A1- 2009 042 572

## Description

### FIELD OF THE INVENTION

The present invention relates to mobile communication technology and particularly, to a handover method where a user moves from one cell to another under a CONNECTED mode, and to a mobile terminal and a base station involved in the handover.

### BACKGROUND OF THE INVENTION

Cellular mobile phones greatly facilitate people's communication. The 2nd generation Global System for Mobile Communication (GSM) utilizes digital communication techniques, thus improving the communication quality of mobile communication. As an important organization in the field of mobile communication, the 3rd Generation Partnership Project (3GPP) greatly promotes the standardization progress of the Third Generation (3G) mobile communication techniques, and specifies a series of communication system standards, including Wide Code Division Multiple Access (WCDMA), High Speed Downlink Packet Access (HSDPA), High Speed Uplink Packet Access (HSUPA), etc.

To deal with the challenge resulted from broadband access techniques and to meet the growing requirements of new services, 3GPP begins to work on the standardization of the 3G Long Term Evolution (LTE) techniques at the end of 2004. It is desired to further increase spectrum efficiency, to improve performance of a cell-edge user, to reduce system delay, to provide a high speed mobile user with an access service of a higher rate, and so on. On the basis of the LTE techniques, the LTE-Advanced (LTE-A) techniques much further multiple the spectrum bandwidth, multiple the data rate, and provide more mobile users with services of higher speed and better performance.

In various mobile communication systems as described above, mobility management for the user under the CONNECTED state is particularly important. In order to implement management for the mobility of the user under the CONNECTED state, the concept of handover is defined in the mobile communication system, where a handover from the current serving cell to another cell is allowable for the user in the CONNECTED state when a certain condition is met. Without the handover, the user may encounter a situation that when moving out of the serving cell, he/she may experience a call drop before accessing a new cell, which may significantly affect the service satisfaction of the user.

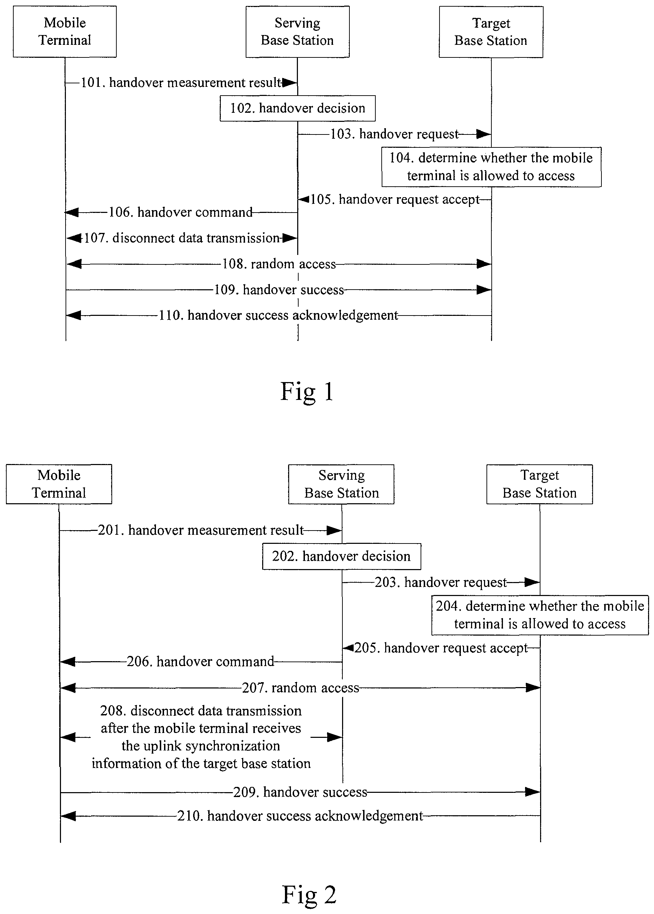

In general, the handover includes three main operations: handover measurement, handover decision, and handover execution. Figure 1 is a flow chart illustrating a handover method in an LTE system, which includes the following.

Step 101: A mobile terminal measures the Reference Signal Received Power (RSRP) or the Reference Signal Received Quality (RSRQ) or other of the base station of an adjacent cell and a serving base station according to measurement configuration received from the serving base station, and sends a measurement report to the serving base station if a predetermined condition is met, thus to complete the handover measurement operation.

Step 102: The serving base station determines whether it is required to perform a handover, and if yes, selects a target base station according to the signal intensity of each adjacent cell in the measurement report.

Step 103: The serving base station sends a handover request to the selected target base station.

Step 104: The target base station that receives the handover request determines whether the mobile terminal is allowed to access.

Step 105: After determining that the mobile terminal is allowed to access, the target base station feeds back a handover request accept signal to the serving base station, and makes preparation for the handover. After receiving the handover request from the serving base station, the target base station may perform an access decision according to access control principles such as service privileges, loads and the like. If it is determined that the handover request of the mobile terminal is acceptable, the preparation for the handover is made by way of allocating a free random access preamble for the mobile terminal, reserving a data resource for the mobile terminal, etc.

Step 106: The serving base station sends a handover command to the mobile terminal, informs the user to switch to the target base station, and meanwhile stops allocating the uplink and downlink transmission resource for the user. The handover execution command sent from the serving base station may include relevant information (e.g. the target cell number and the random access resource, and the like) of the target base station.

The above Steps 102-106 complete the handover decision operation.

Step 107: After receiving the handover command, the mobile terminal stops data transmission with the serving base station.

Step 108: The mobile terminal initiates a random access process to the target base station, and establishes uplink synchronization with the target base station.

Step 109: After obtaining the uplink synchronization information of the target base station, the mobile terminal sends a handover success message to the target base station.

Step 110: After receiving the handover success message from the mobile terminal, the target base station returns a handover success acknowledgement message to the mobile terminal, to inform the mobile terminal that it may begin to send uplink data to the target base station.

The handover execution operation is completed through the above Steps 107-110.

Document WO2007116227, published on 2007-10-18 discloses a handover process in the case of multi-carrier systems.

As can be seen from the above handover process of the LTE system, there may be a time interval between the time the mobile terminal disconnects the data transmission with the serving base station and the time it begins the data transmission with the target base station. During the time interval, the mobile terminal can interchange data in the user plane with neither of the base stations. Such a time interval is called a handover interruption time. As can be apparent that, the handover interruption time may lead to interruption in the user's data transmission, thus affecting the user's throughput and time delay, which if being more seriously, may lead to a call drop. Therefore, in order to ensure service quality for the user and to improve the handover performance, it is quite necessary to reduce the handover interruption time.

### SUMMARY OF THE INVENTION

In order to solve the above technical problem, the present invention provides a handover method, a mobile terminal and a base station, which can greatly reduce the handover interruption time, and improve the handover performance.

An embodiment of the present invention provides a handover method, which includes: continuing, by a serving base station, allocating uplink and downlink transmission resource for a mobile terminal when sending a handover command to the mobile terminal enabling the mobile terminal keep a data communication with the serving base station after receiving the handover command, and meanwhile perform a random access process to a target base station to obtain uplink synchronization information of the target base station;
wherein the mobile terminal performs the random access process to the target base station on a first carrier;
the mobile terminal keeps a data communication with the serving base station on a second carrier;
wherein the method further comprises: stopping, by the serving base station, allocating the uplink and downlink transmission resource for the mobile terminal on the second carrier when a communication terminating condition is met; and disconnecting the data communication between the mobile terminal and the serving base station on the second carrier;
wherein stopping allocating the uplink and downlink transmission resource for the mobile terminal on the second carrier when a communication terminating condition is met includes: stopping, by the serving base station, allocating the uplink and downlink transmission resource for the mobile terminal on the second carrier after the mobile terminal obtains the uplink synchronization information of the target base station on the first carrier;
wherein the method further comprises: receiving, by the serving base station, a handover measurement result reported from the mobile terminal on the second carrier; determining, by the serving base station, a target base station, and sending a handover request to the determined target base station, after determining that it is required to perform a handover for the mobile terminal according to the received handover measurement result reported from the mobile terminal; receiving, by the serving base station, a carrier number of the first carrier and a position of a random access resource block fed back from the target base station; and sending, by the serving base station, to the mobile terminal on the second carrier the carrier number of the first carrier and the position of the random access resource block fed back from the target base station enabling the mobile terminal execute the random access process using the first carrier and the random access resource block fed back from the target base station;
characterized in that the handover request comprises uplink carrier usage information of the mobile terminal; and the method further comprises:
after receiving the handover request and determining that the mobile terminal is allowed to access, selecting, by the target base station, the first carrier for the mobile terminal according to the uplink carrier usage information of the mobile terminal, and feeding back the carrier number of the first carrier and the position of the random access resource block to the serving base station through a handover request accept message.

Continuing allocating uplink and downlink transmission resource for a mobile terminal includes: allocating, by the serving base station, for the mobile terminal an uplink carrier and a resource block used by the mobile terminal for its uplink communication with the serving base station according to a channel condition, wherein the allocated resource block is different from the random access resource block on the first carrier selected by the target base station; and sending, by the serving base station, the carrier number of the uplink carrier and the position of the resource block allocated to the mobile terminal for the uplink communication with the serving base station, to the mobile terminal through a resource scheduling command enabling the mobile terminal send uplink data to the serving base station through the uplink carrier and the resource block allocated by the serving base station.

Allocating for the mobile terminal an uplink carrier and a resource block used by the mobile terminal for its uplink communication with the serving base station includes: performing, by the serving base station, allocation for a cluster on an uplink carrier other than the first carrier enabling the mobile terminal send a random access preamble to the target base station over the random access resource block of the first carrier, wherein the cluster is multiple continuous resource blocks,, and meanwhile send the uplink data or signaling to the serving base station over the allocated cluster of the other uplink carrier.

Selecting the first carrier for the mobile terminal includes: selecting the carrier on which the number of the resource blocks used by the mobile terminal is least as the first carrier.

The target base station sends the uplink synchronization information to the mobile terminal through the serving base station, and wherein, the uplink synchronization information comprises: a timing advance adjustment value TA and a power adjustment value P; and stopping allocating the uplink and downlink transmission resource for the mobile terminal after the mobile terminal obtains the uplink synchronization information of the target base station includes: stopping, by the serving base station, allocating the uplink and downlink transmission resource for the mobile terminal after receiving and forwarding the uplink synchronization information sent from the target base station to the mobile terminal.

The handover method further includes: sending, by the target base station, a data resource releasing instruction to the serving base station when sending the uplink synchronization information to the mobile terminal directly or receiving a handover success message sent from the mobile terminal or sending a handover success acknowledgement message to the mobile terminal directly; stopping allocating the uplink and downlink transmission resource for the mobile terminal after the mobile terminal obtains the uplink synchronization information of the target base station includes: stopping, by the serving base station, allocating the uplink and downlink transmission resource for the mobile terminal after receiving the data resource releasing instruction from the target base station.

The handover method further includes: receiving and forwarding, by the serving base station, a handover success acknowledgement message sent from the target base station to the mobile terminal, and stopping allocating the uplink and downlink transmission resource for the mobile terminal after the mobile terminal obtains the uplink synchronization information of the target base station includes: stopping, by the serving base station, allocating the uplink and downlink transmission resource for the mobile terminal after forwarding the handover success acknowledgement message to the mobile terminal.

A handover system, comprising a serving base station, a target base station, and a mobile terminal, wherein the serving base station comprises a handover decision unit, an inter-base-station communication unit, and a resource allocating,
the handover decision unit is adapted to determine whether it is required to perform a handover according to a handover measurement result received from a mobile terminal on a second carrier, and if it is required to perform a handover, to select a target base station;
the inter-base-station communication unit is adapted to send a handover request to the target base station selected by the handover decision unit, and to receive a carrier number of a first carrier and a position of a random access resource block selected by the target base station, so that the serving base station sends to the mobile terminal on the second carrier the carrier number of the first carrier and the position of the random access resource block fed back from the target base station enabling the mobile terminal execute the random access process using the first carrier and the random access resource block fed back from the target base station; and
the resource allocating unit is adapted to continue allocating uplink and downlink transmission resource on the second carrier for the mobile terminal when sending a handover command to the mobile terminal, wherein the handover command comprises a carrier number of the first carrier and the position of the random access resource block fed back from the target base station, so that the mobile terminal is capable of keeping a data transmission with the serving base station on the second carrier, and meanwhile executes a random access process to the target base station using the first carrier and the random access resource block fed back from the target base station to obtain uplink synchronization information of the target base station on the first carrier; and to stop allocating the uplink and downlink transmission resource for the mobile terminal when a communication terminating condition is met, and to disconnect the data communication between the mobile terminal and the serving base station on the second carrier; wherein stopping allocating the uplink and downlink transmission resource for the mobile terminal when a communication terminating condition is met comprises: stopping, by the serving base station, allocating the uplink and downlink transmission resource for the mobile terminal after the mobile terminal obtains the uplink synchronization information of the target base station;
characterized in that the handover request comprises uplink carrier usage information of the mobile terminal; and
the target base station is adapted to after receiving the handover request and determining that the mobile terminal is allowed to access, select the first carrier for the mobile terminal according to the uplink carrier usage information of the mobile terminal, and feedback the carrier number of the first carrier and the position of the random access resource block to the serving base station through a handover request accept message.

In the handover method according to the embodiment of the present invention, the mobile terminal does not disconnect the data transmission with the serving base station after receiving the handover command of the serving base station, but obtains the uplink synchronization information of the target base station first and disconnects the data transmission with the serving base station only when a communication terminating condition is met, therefore the handover interruption time may not include the time required for the random access process, thus the switching interruption time of the handover process can be greatly reduced, and the handover performance can be improved.

### BRIEF DESCRIPTION OF THE DRAWINGS

Hereinafter, illustrative embodiments of the present invention are described in detail with reference to the accompanying drawings, so that those ordinarily skilled in the art can better understand the above and other features and advantages of the present invention. In the accompanying drawings:
Figure 1 is a flow chart illustrating a handover method in an LTE system;
Figure 2 is a flow chart illustrating the handover method according to an embodiment of the present invention;
Figure 3 is a schematic diagram illustrating carrier aggregation in LTE-A techniques;
Figure 4 is a schematic diagram illustrating a transmission manner of multiple discontinuous clusters within the same uplink carrier in the LTE-A techniques;
Figure 5 is a schematic diagram illustrating a transmission manner of multiple discontinuous clusters within two uplink carriers in the LTE-A techniques;
Figure 6 is a schematic diagram illustrating resource allocation of Method 1 according to an embodiment of the present invention;
Figure 7 is a schematic diagram illustrating resource allocation of Method 2 according to an embodiment of the present invention;
Figure 8 is a schematic diagram illustrating resource allocation in the LTE system;
Figure 9 is a schematic diagram illustrating an internal structure of a mobile terminal according to an embodiment of the present invention;
Figure 10(a) and (b) are diagrams illustrating two structures of a sending unit when resource allocation is performed according to Method 1;
Figure 11 is a diagram illustrating an internal structure of the sending unit when resource allocation is performed according to Method 2;
Figure 12 is a schematic diagram illustrating an internal structure of a serving base station according to an embodiment of the present invention; and
Figure 13 is a flow chart illustrating the handover method according to another embodiment of the present invention.

### DETAILED DESCRIPTION OF THE EMBODIMENTS

During the handover process in the LTE system as shown in Figure 1, for the Contention-based random access manner, the handover interruption time typically includes the time taken for executing Steps 108-110; while for the Contention-free random access manner, the handover interruption time typically includes only the time taken for executing Step 108. Here, the Contention-free random access manner means that the target base station allocates a dedicated random access preamble for the mobile terminal. In this case, once Step 108 is executed, the uplink and downlink data transmission between the mobile terminal and the target base station may begin. Moreover, due to the dedicated random access preamble, there is no collision for the random access, which may succeed by being executed only once, and there is no need to retransmit the random access preamble. Therefore, in this manner, the handover interruption time typically includes the time taken for executing Step 108. While, the Contention-based random access manner means that the target base station does not allocate the dedicated random access preamble for the mobile terminal, where the mobile terminal needs to use the random access preamble common to the target base station to complete the random access process. As a result, the random access process of the mobile terminal may collide with that of another mobile terminal. In this case, before resending the random access preamble, the mobile terminal needs to carry out a backoff for a period of time. Moreover, after the uplink synchronization with the target base station is established, the uplink and downlink data transmission between the mobile terminal and the target base station still can not start, where it is further required to execute Steps 109 and 110 to trigger the initiation of the downlink and the uplink data transmission respectively. Therefore, in this manner, the handover interruption time typically includes the time taken for executing Steps 108-110.

Hereinafter, the time required for executing Steps 108-110 is estimated respectively.

In Step 108, the mobile terminal may initiate the random access process to the target base station, and performs the uplink synchronization with the target base station. The random access process includes four steps as follows:
(1) The mobile terminal completes downlink synchronization with the target base station. Typically, it is required to take 1ms (millisecond) to execute this step.
(2) The mobile terminal waits for sending the random access preamble to the target base station. If it is assumed that one frame (10ms) contains two timeslots, i.e. two 1ms contained therein may be used to send the random access preamble, the time for the mobile terminal to wait for sending the random access preamble to the target base station is 2.5ms in average.
(3) The mobile terminal sends the random access preamble to the target base station. Typically, it is required to take 1ms from the time the mobile terminal emits the random access preamble to the time the target base station receives the random access preamble.
(4) The mobile terminal waits and receives the uplink synchronization information from the target base station. Such a process needs to include the time for the target base station to process the preamble and the time for the uplink synchronization information to be transmitted from the target base station to the mobile terminal, where typically it is required to take 7.5ms in total.

Here, the uplink synchronization information may alternatively be called random access feedback information, which typically includes a timing advance adjustment value TA and a power adjustment value P.

Summing up the time required in the above four steps obtains the average time (i.e. 12ms) required for completing the random access process. If the error of the waiting time in step (2) is taken into consideration, the time required for completing the random access process is about 12 ± 2.5ms.

Therefore, for the Contention-free random access manner, the handover interruption time is typically 12 ± 2.5ms.

While, for the Contention-based random access manner, if collision occurs in the random access process, the mobile terminal firstly needs to wait for a random backoff time, then to execute the above steps (2), (3) and (4). In this way, after a retransmission of the random access preamble, the time required for the random access process is lengthened at least 10 ± 2.5ms, i.e. is about 22 ± 2.5ms.

In Step 109, the mobile terminal may send a handover success message to the target base station. The time for the transmission of the handover success message and the time for the target base station to process the handover success message take at least 5ms. Moreover, if the error rate is assumed to be 30%, it is required to take 1.5ms to resend the handover success message. Thus it is found that, the time required for executing Step 109 is 6.5ms in average.

After the execution of Step 109 is completed, the target base station may send downlink data to the mobile terminal. In other words, for the Contention-based random access manner, the downlink handover interruption time is the time required for executing Step 108 and Step 109, which is at least 18.5 ± 2.5ms (denoted as 18.5ms). In this case, the mobile terminal still can not send uplink data to the target base station. Therefore, in the Contention-based random access manner, the downlink handover interruption time is different from the uplink handover interruption time.

In Step 110, after receiving the handover success message from the mobile terminal, by returning a downlink handover success acknowledgement message to the mobile terminal, the target base station informs the mobile terminal that it may begin to send uplink data. The signaling transmission from the target base station to the user and the processing process of the user end take at least 5ms. If the error rate is assumed to be 30%, 1.5ms is required for resending, i.e. the required time is at least 6.5ms.

After the execution of Step 110 is completed, the mobile terminal may send uplink data to the target base station. In other words, for the Contention-based random access manner, the uplink handover interruption time is the time required for executing Steps 108, 109 and 110, which is at least 25 ± 2.5 ms (denoted as 25ms).

The following Table 1 records the componential parts of the handover interruption time in the Contention-based random access manner and the Contention-free random access manner, where the time within the brackets refers to the handover interruption time required to be added when retransmission occurs.

**Table 1**

| | Contention-based random access manner (ms) | Contention-free random access manner (ms) |
|---|---|---|
| Step 108 | 12± 2.5 (10± 2.5) | 12± 2.5 |
| Step 109 | 6.5 | 0 |
| Step 110 | 6.5 | 0 |

The following Table 2 records the uplink and the downlink handover interruption time in the Contention-based random access manner and the Contention-free random access manner that are estimated by way of the above method, where the time within the brackets refers to the handover interruption time when retransmission occurs.

**Table 2**

| | Contention-based random access manner (ms) | Contention-free random access manner (ms) |
|---|---|---|
| Uplink handover interruption time | 25± 2.5 (35± 2.5) | 12± 2.5 |
| Downlink handover interruption time | 18.5± 2.5 (28.5± 2.5) | 12± 2.5 |

It can be seen from the above Table 1 and Table 2 that, the main componential part of the handover interruption time is the time required for the random access process of Step 108. In order to reduce the handover interruption time as much as possible, the embodiment of the present invention provides a new handover method.

In the handover method according to an embodiment of the present invention, when sending a handover command to the mobile terminal, the serving base station continues allocating the uplink and downlink transmission resource for the mobile terminal, so that the mobile terminal is capable of keeping the data transmission with the serving base station after receiving the handover command, and meanwhile executes the random access process to the target base station to obtain the uplink synchronization information of the target base station. When a preconfigured communication terminating condition is met, such as when the mobile terminal obtains the uplink synchronization information of the target base station, the serving base station finishes transmitting all the data packets buffered or the mobile terminal is required to handover to the target base station on the second carrier, the serving base station stops allocating the uplink and downlink transmission resource for the mobile terminal, so that the mobile terminal disconnects the data transmission with the serving base station.

In this case, after receiving the handover command from the serving base station, the mobile terminal first executes the random access process to the target base station, establishes the uplink synchronization with the target base station, and meanwhile keeps the data transmission with the serving base station; and then disconnects the data transmission with the serving base station after obtaining the uplink synchronization information of the target base station, thus greatly reducing the handover interruption time of the handover process.

Figure 2 is a flow chart illustrating the handover method according to an embodiment of the present invention. As shown in Figure 2, the handover method according to the present invention mainly includes the following.

Step 201: A mobile terminal measures the RSRP of the base station of an adjacent cell and a serving base station according to measurement configuration from the serving base station, and sends a measurement report containing the handover measurement result to the serving base station if a predetermined condition (also called a handover condition) is met, thus to complete the handover measurement operation.

Steps 202-203: The serving base station determines whether it is required to perform a handover, and if yes, selects a target base station according to the signal intensity of each adjacent cell in the measurement report, and sends a handover request to the selected target base station.

The serving base station may have the context relationship information of the mobile terminal, e.g. the user identifier and the user service type corresponding to the mobile terminal, carried in the handover request sent to the target base station, so that the target base station determines whether the mobile terminal is allowed to access.

Moreover, the serving base station may have the uplink carrier usage information of the mobile terminal carried in the handover request, so that the target base station selects the carrier for the mobile terminal to send the random access preamble. The uplink carrier usage information may include one or more of the following information: the uplink carriers of the serving base station; the uplink carriers used, and those not used by the mobile terminal; the uplink carriers on which the mobile terminal uses more resources, and those on which it uses less resources; and an uplink carrier number for indicating that the mobile terminal uses less resources on this uplink carrier than on other uplink carriers.

Step 204: The target base station that receives the handover request determines whether the mobile terminal is allowed to access.

After receiving the handover request from the serving base station, the target base station may perform an access decision according to access control principles such as service privileges, loads and the like, to determine whether the mobile terminal is allowed to access.

Step 205: After determining that the mobile terminal is allowed to access, the target base station selects the uplink carrier used by the mobile terminal in sending the random access preamble according to the usage status of its own resource as well as the uplink carrier usage information of the mobile terminal provided by the serving base station (where the selected uplink carrier is called a random access carrier, and the resource block on the random access carrier used for sending the random access preamble is a random access resource block), and feeds back the carrier number of the selected random access carrier and the position of the random access resource block to the serving base station through a handover request accept message.

In this step, the target base station may select the carrier on which the number of the resource blocks used by the mobile terminal is least as the random access carrier.

The handover request accept message may further include the random access preamble allocated for the mobile terminal by the target base station.

Step 206: The serving base station allocates the uplink and downlink transmission resource for the mobile terminal according to the channel condition, which includes allocating for the mobile terminal the uplink carrier and the resource block used by the mobile terminal for its uplink communication with the serving base station, determining resource scheduling information, and sending the resource scheduling information as well as the carrier number of the random access carrier and the position of the random access resource block to the mobile terminal.

Specifically, the resource scheduling information includes: the carrier number of the random access carrier and the position of the random access resource block used by the mobile terminal for its uplink communication with the serving base station that are selected by the serving base station. The serving base station may send the resource allocation result to the mobile terminal through a resource scheduling command, and send the carrier number of the random access carrier and the position of the random access resource block to the mobile terminal through a handover command.

Moreover, the resource block used by the mobile terminal for its uplink communication with the serving base station that is selected by the serving base station is a different resource block from the random access resource block.

Further, in the case that the target base station has allocated a random access preamble for the mobile terminal, the handover command may further include the random access preamble allocated for the mobile terminal by the target base station.

Step 207: After receiving the handover command from the serving base station, the mobile terminal executes the random access process to the target base station using the random access carrier and the random access resource block, to obtain the uplink synchronization information of the target base station, and meanwhile keeps the data transmission with the serving base station using the resource allocated in the resource scheduling command.

The random access process of this step may specifically include: the mobile terminal sends the random access preamble to the target base station over the random access resource block on the random access carrier, and waits for the uplink synchronization information fed back from the target base station. In this step, if the target base station has allocated a dedicated random access preamble for the mobile terminal, the mobile terminal may send the dedicated random access preamble to the target base station; otherwise, the mobile terminal may send to the target base station the random access preamble common to the target base station. After receiving the random access preamble sent from the mobile terminal, the target base station may send the uplink synchronization information to the mobile terminal. Specifically, the uplink synchronization information may include the timing advance adjustment value TA, and may further include the power adjustment value P. After receiving the random access preamble sent from the mobile terminal, the target base station may directly, or alternatively may through the serving base station, send the uplink synchronization information to the mobile terminal. If the uplink synchronization information is sent to the mobile terminal through the serving base station, there is no need for the mobile terminal to receive the signaling or data from the two stations (the serving base station and the target base station) at the same time, thus the complexity of the mobile terminal may be reduced.

Step 208: After the mobile terminal receives the uplink synchronization information of the target base station, the serving base station stops allocating the uplink and downlink transmission resource for the mobile terminal, so that the mobile terminal disconnects the data transmission with the serving base station.

In this step, if the target base station sends the uplink synchronization information to the mobile terminal through the serving base station, after receiving and forwarding the uplink synchronization information of the target base station, the serving base station may stops allocating the uplink and downlink transmission resource for the mobile terminal, so that the mobile terminal disconnects the data transmission therewith. If the target base station sends the uplink synchronization information to the mobile terminal directly, the target base station may meanwhile sends a data resource releasing instruction to the serving base station, to inform the serving base station that it may stop allocating the uplink and downlink transmission resource for the mobile terminal. After receiving the data resource releasing instruction of the target base station, the serving base station may stop allocating the uplink and downlink transmission resource for the mobile terminal. Moreover, it may be the mobile terminal that sends the data resource releasing instruction to the serving base station after receiving the uplink synchronization information of the target base station, to request the serving base station to stop allocating the uplink and downlink transmission resource for it.

Steps 209-210: The mobile terminal sends a handover success message to the target base station; and after receiving the handover success message from the mobile terminal, the target base station returns a handover success acknowledgement message to the mobile terminal.

By way of the handover method as shown in Figure 2, the mobile terminal does not disconnect the data transmission with the serving base station after receiving the handover command of the serving base station, but establishes the uplink synchronization with the target base station first and disconnects the data transmission with the serving base station only after obtaining the uplink synchronization information of the target base station, therefore in the handover method according to the embodiment, the handover interruption time may not include the time required for the random access process of Step 108. Table 3 records the uplink and the downlink handover interruption time in the Contention-based random access manner and the Contention-free random access manner in the case of utilizing the handover method according to the embodiment.

**Table 3**

| | Contention-based random access manner (ms) | Contention-free random access manner (ms) |
|---|---|---|
| Uplink handover interruption time | 13 | 0 |
| Downlink handover interruption time | 6.5 | 0 |

As can be seen from Table 3, by utilizing the handover method according to the embodiment, for the Contention-free random access manner, the uplink and the downlink handover interruption time may be reduced to 0 ms, while for the Contention-based random access manner, the uplink and the downlink handover interruption time may also be greatly reduced, thus the handover method according to the embodiment can greatly reduce the handover interruption time, and improve the handover performance.

In order to further reduce the uplink and the downlink handover interruption time of the Contention-based random access manner, after Step 207, the execution of Step 208 may be delayed, but to execute Step 209 first and then to execute Step 208, thus the downlink handover interruption time is reduced to 0 ms, and the uplink handover interruption time is reduced to 6.5 ms. In this case, when sending the handover success message to the target base station, the mobile terminal may meanwhile send the data resource releasing instruction to the serving base station, or alternatively, after receiving the handover success message from the mobile terminal, the target base station sends the data resource releasing instruction to the serving base station. After receiving the data resource releasing instruction from the mobile terminal or the target base station, the serving base station may stop allocating the uplink and downlink transmission resource for the mobile terminal, so that the mobile terminal disconnects the data transmission with the serving base station.

Further, after the execution of Step 209 is completed, Step 208 may still be delayed, but to execute Step 210 first and then to execute step208, thus to further reduce both the uplink and the downlink interruption time to 0 ms. In this case, in Step 210, the target base station may directly, or alternatively through the serving base station, return the handover success acknowledgement message to the mobile terminal. If the target base station returns the handover success acknowledgement message through the serving base station, there is no need for the mobile terminal to receive the signaling or data from the two stations (the serving base station and the target base station) at the same time, thus the complexity of the mobile terminal may be reduced. In the case that the target base station sends the handover success acknowledgement message through the serving base station, the serving base station may stop allocating the uplink and downlink transmission resource for the mobile terminal after receiving and forwarding the handover success acknowledgement message from the target base station, so that the mobile terminal disconnects the data transmission therewith. If the target base station sends the handover success acknowledgement message to the mobile terminal directly, the target base station may meanwhile sends the resource releasing instruction to the serving base station, to inform the serving base station to release the resource with the mobile terminal. After receiving the resource releasing instruction of the target base station, the serving base station may stops allocating the uplink and downlink transmission resource for the mobile terminal. Moreover, it may be the mobile terminal that sends the data resource releasing instruction to the serving base station after receiving the handover success acknowledgement message of the target base station, to request the serving base station to stop allocating the uplink and downlink transmission resource for it.

Hereinafter, the method that the serving base station of the LTE-A system executes Step 206 to perform resource allocation is described in detail.

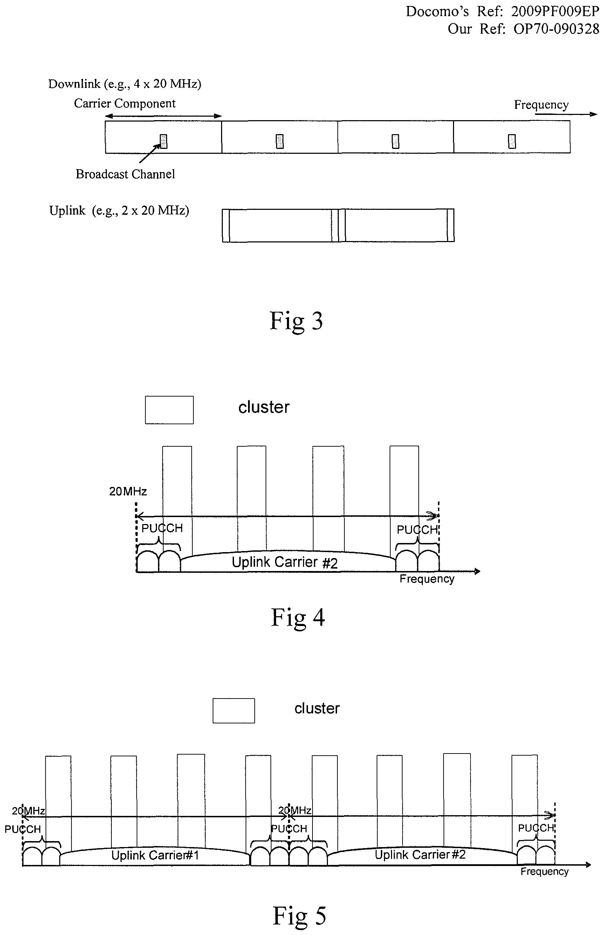

Figure 3 is a schematic diagram illustrating carrier integration in LTE-A techniques. For an LTE-A user, after carrier integration, there may be multiple uplink carriers usable in parallel with respect to a cell, and moreover, the 3GPP Work Group has already reached an agreement for standardizing that multiple uplink carriers use the N*cluster Discrete Fourier Transform-Spread Orthogonal Frequency Division Multiplexing (N*cluster-DFT-S-OFDM). As shown in Figure 4, a transmission manner of multiple discontinuous clusters within the same uplink carrier is illustrated, where the cluster is multiple continuous resource blocks (RB), and a user may be allocated with multiple clusters at one time. To facilitate scheduling, it is typically specified that the RB used for the mobile terminal to send the uplink signaling is distributed at the two borders of the bandwidth, while the RB used for sending the uplink data is centralized in the middle of the bandwidth. Therefore, based on multiple discrete clusters, the cluster-DFT-S-OFDM manner renders the user being able to transmit the uplink signaling and data at the same time. Figure 5 illustrates the uplink transmission manner of two uplink carriers, where each of the carriers uses the cluster-DFT-S-OFDM manner to perform uplink transmission separately. In addition, if the carrier integration corresponds to the continuous carrier integration manner, i.e. the positions of the multiple carriers are next to each other, multiple parallel uplink carrier signals may use the same transmitter to perform sending. If the multiple carriers correspond to discontinuous carrier integration, multiple transmitters are required to send multiple parallel uplink carrier signals.

It should be further explained that, on a certain uplink carrier, the physical resource blocks used for sending the random access preamble are 6 RBs, which may be regarded as a cluster the length of which is 6 RBs. Moreover, the positions of the 6 RBs are fixed at a certain time, and their positions may be any position (e.g. at the two borders or in the middle of the uplink carrier) on the uplink carrier.

Based on the above description, and taking the N*cluster-DFT-S-OFDM uplink transmission manner in the LTE-A as well as the 6 RBs cluster used for sending the random access preamble also into consideration, it can be seen that the user can keep uplink connections with two cells at the same time.

At First, the case of continuous carrier integration, i.e. a transmitter being used by multiple uplink carriers, is taken into consideration.

In the LTE-A system, after receiving the carrier number of the random access carrier and the position of the random access resource block fed back from the target base station, the serving base station may complete the resource allocation by way of the following two methods.

### Method 1:

Firstly, the serving base station determines the random access carrier and the position of the random access resource block according to the handover request accept message;

Then, the serving base station performs allocation for a cluster on the random access carrier other than the random access resource block, determines the resource scheduling information, so that the mobile terminal sends the random access preamble to the target base station over the random access resource block of the random access carrier, and meanwhile sends the uplink data or signaling to the serving base station over the allocated other resource block on the random access carrier; and

Finally, the serving base station sends the determined resource scheduling information to the mobile terminal through the resource scheduling command, and sends the carrier number of the random access carrier and the position of the random access resource block to the mobile terminal through the handover command.

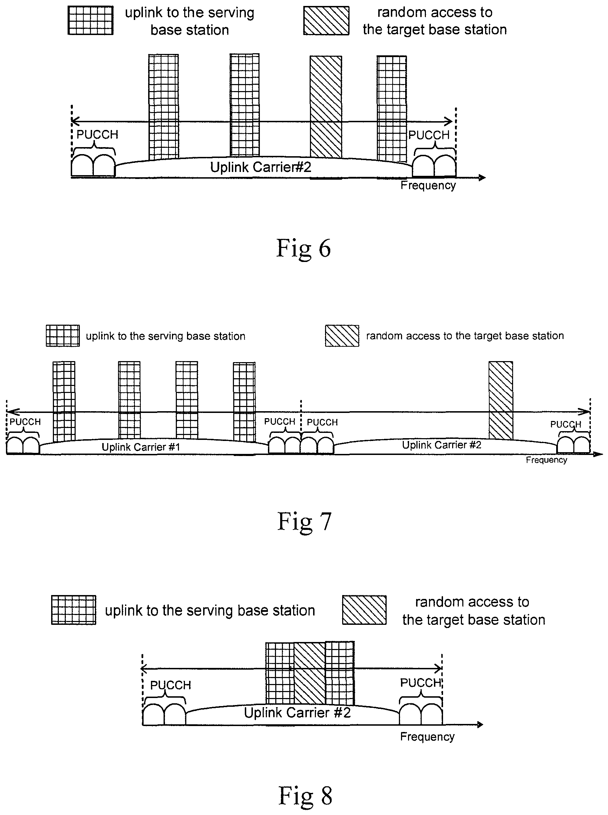

Figure 6 is a schematic diagram illustrating resource allocation of Method 1. Specifically, the cluster being filled with lattices represents the cluster allocated to the mobile terminal for communication with the serving base station, and the cluster being filled with inclined lines represents the cluster allocated to the mobile terminal for sending the random access preamble to the target base station. As shown in Figure 6, the uplink carrier #2 is the random access carrier. The mobile terminal uses the uplink carrier #2 to communicate with the serving base station, and may send control signaling to the serving base station, and may also send data to the serving base station, and meanwhile sends the random access preamble to the target base station using the uplink carrier #2.

Method 1 is applicable to the following scenario: 1. when the serving cell and the target cell both only have the same uplink carrier, e.g. only have the uplink carrier #2, the mobile terminal may only communicate with the serving base station and the target base station using the same uplink carrier; 2. when the serving base station and/or the target base station have multiple uplink carriers, where the target base station suggests the user to send the random access preamble over the uplink carrier #2, due to the reason that the collision rate on the uplink carrier #2 is low or another reason, while at the serving base station, the user requires higher uplink rate, or the channel condition of the uplink carrier #2 is better, the user can not release all resource blocks on the uplink carrier #2, but only can appropriately release the random access resource block used for emitting the random access preamble, the user also may only use the same uplink carrier to communicate with the serving base station and the target base station at the same time.

### Method 2:

Firstly, the serving base station determines the random access carrier and the position of the random access resource block according to the handover request accept message;

Then, the serving base station performs allocation for the cluster on an uplink carrier other than the random access carrier, determines the resource scheduling information, so that the mobile terminal sends the random access preamble to the target base station over the random access resource block of the random access carrier, and meanwhile sends the uplink data or signaling to the serving base station over the allocated cluster of the other uplink carrier; and

Finally, the serving base station sends the determined resource scheduling information to the mobile terminal through the resource scheduling command, and sends the carrier number of the random access carrier and the position of the random access resource block to the mobile terminal through the handover command.

Figure 7 is a schematic diagram illustrating resource allocation of Method 2. Specifically, the cluster being filled with lattices represents the cluster allocated to the mobile terminal for communication with the serving base station, and the cluster being filled with inclined lines represents the cluster allocated to the mobile terminal for sending the random access preamble to the target base station. As shown in Figure 7, the uplink carrier #2 is the random access carrier. The mobile terminal uses the uplink carrier #1 to communicate with the serving base station, and may send control signaling to the serving base station, and may also send data to the serving base station, and the mobile terminal sends the random access preamble to the target base station using the uplink carrier #2.

Method 2 is applicable to the following scenario: 1. when the serving cell and the target cell each have only one uplink carrier but the two uplink carriers are different from each other, e.g. the serving base station only has the uplink carrier #1 and the target base station only has the uplink carrier #2, the user may communicate with the serving base station and the target base station using different uplink carriers respectively at the same time; 2. when the serving base station and/or the target base station have multiple uplink carriers, where the target base station suggests the user to send the random access preamble over the uplink carrier #2, due to the reason that the collision rate on the uplink carrier #2 is low or another reason, while at the serving base station, there is no uplink carrier #2, or the user requires low uplink rate, or the channel condition of the uplink carrier #2 is bad, the user may not use the uplink carrier #2 to communicate with the serving base station, the user may use different uplink carriers to communicate with the serving base station and the target base station respectively at the same time.

As can be seen from the above analysis, in the handover method according to the embodiment of the present invention, it is required to send two signals (one to the serving base station, and another to the target base station) when the mobile terminal performs random access with the target base station. The signal to the serving base station is processed according to the timing advance adjustment value TA and the power adjustment value P given by the uplink synchronization control and power control of the serving base station. While, the timing advance adjustment value TA and the power adjustment value P is just what the random access preamble sent to the target base station seeks to obtain, thus the time adjustment value for sending the random access preamble to the target base station may be selected randomly. While, for the power adjustment value, if the power for the user's random access is designated in the handover request response of the target base station, the user performs sending in such a power. Otherwise, the user performs sending in the highest power. If the power is inadequate, the signal sending to the target base station is taken care of first.

In the embodiment of the present invention, through the random access process of Step 207, the mobile terminal has decoded the timing advance adjustment value TA and the power adjustment value P carried in the random access feedback from the target base station. Therefore, when the mobile terminal sends the handover success command in Step 209, it is required to add a timing advance adjustment value TA to the communication link with the target base station, and it is further required to adjust the transmission power according to the power adjustment value provided by the target base station. If the communication with the serving base station is still kept at this time, the signal to the serving base station is processed according to the timing advance adjustment value TA and the power adjustment value P given by the uplink synchronization control and power control of the serving base station. In other words, for the two signals (one to the serving base station, and another to the target base station) of the user, time adjustment and power adjustment are performed for the two signals respectively. If the power is inadequate, the signal sending to the target base station is taken care of first.

The above method for carrier allocation is the carrier allocating method in the LTE-A system, which is applicable to the intra-frequency handover and inter-frequency handover from the LTE-A to the LTE-A. Specifically, the carriers of the serving base station and the target base station are totally identical to each other in the case of intra-frequency handover, and the carriers of the serving base station and the target base station are not totally identical to each other in the case of inter-frequency handover.

Hereinafter, the method that the serving base station of the LTE system performs resource allocation when implementing Step 206 is described in detail.

Because the LTE system uses the Single Carrier Frequency Division Multiple Address (SC-FDMA) transmission manner for the uplink, i.e. a user can be allocated with only one block of continuous multiple RBs (equivalent to a cluster). Thus in the LTE system, after receiving the handover request accept information fed back from the target base station, the serving base station firstly determines the random access carrier and the position of the random access resource block; then performs allocation for a resource block on the random access carrier other than the random access resource block, and determines the resource scheduling information, where the random access resource block is adjacent to the allocated resource block used for the mobile terminal to sending uplink data or signaling to the serving base station, so that the mobile terminal sends the random access preamble to the target base station at the position of the random access resource block on the random access carrier, and meanwhile sends the uplink data or signaling to the serving base station at the allocated other resource block; finally, the serving base station sends the determined resource scheduling information to the mobile terminal through the resource scheduling command, and sends the carrier number of the random access carrier and the position of the random access resource block to the mobile terminal through the handover command.

Figure 8 is a schematic diagram illustrating resource allocation in the LTE system. Specifically, the cluster being filled with lattices represents the cluster allocated to the mobile terminal for communication with the serving base station, and the cluster being filled with inclined lines represents the cluster allocated to the mobile terminal for sending the random access preamble to the target base station. As shown in Figure 8, the resource block allocated to the mobile terminal for communication with the serving base station is adjacent to the random access resource block to form a continuous resource block, so as to meet the characteristics of the uplink transmission manner of SC-FDMA.

It should be explained that, the above method is also applicable to the handover between the LTE and the LTE-A. Moreover, the handover method is not only applicable to the case of continuous carrier integration where multiple carriers use the same transmitter, but also applicable to the case of discontinuous carrier integration where multiple carriers use multiple transmitters.

In the above embodiments the serving base station can either have only one carrier or multiple carriers. In the case of the serving base station having only one carrier, if the serving base station and the target base station use a same carrier, the mobile terminal would uses a resource block on the carrier to perform a random access to the target base station and uses a different resource block on the same carrier to communicate with the serving base station; if the serving base station and the target base station use different carriers, the mobile terminal would uses the carrier of the target base station to perform a random access to the target base station and uses the carrier of the serving base station to communicate with the serving base station. In the case of the serving base station having multiple carriers, the mobile terminal would use different carriers or different resource blocks on a same carrier to perform the random access to the target base station and meanwhile communicates with the serving base station.

No matter in which circumstance, the above handover methods are applicable to the scenario that all the carriers of the serving base station are getting worse. In this scenario, in order to shorten the handover interruption time, the mobile terminal would perform the random access to the target base station and simultaneously keep communicating with the serving base station, and once the random access to the target base station is success, the data links are then handover to the target base station. However, when both the serving base station and the target base station have at least two carriers, and the directions of the transmitting antennas corresponding to different carriers have an angle, the following circumstance may occur: the handover condition is met according to the RSRP or RSRQ of the serving base station and the target base station on a first carrier, while the handover condition is not met according to the RSRP or RSRQ of the serving base station and the target base station on a second carrier. In this case, if taking the first carrier as the handover criterion which is possible when a broader coverage is provided by the first carrier, even if the communication quality with the target base station on the second carrier is bad, the mobile terminal still needs to handover from the serving base station to the target base station. And after handovering to the target base station, the mobile terminal can only communicate with the target base station on the first and second carriers. For the communication quality with the target base station on the second carrier is bad, the second carrier maybe can not be used by the mobile terminal. Therefore, from the view of the whole system, the second carrier is not utilized well.

In order to better utilize the second carrier, another embodiment of the present application provides another handover method. In this method, both the base station and the target base station have at least two carriers, and the handover condition is met on the first carrier, while the handover condition is not met on the second carrier. In this case, when sending the handover command to the mobile terminal, the serving base station continues allocating uplink and downlink transmitting resources on the second carrier to the mobile terminal, thus the mobile terminal can communicate with the serving base station on the second carrier after receiving the handover command. At the same time the mobile terminal can perform the random access to the target base station on the first carrier to obtain the uplink synchronous information of the target base station, and then communicate with the target base station on the first carrier after obtaining the uplink synchronous information of the target base station. The serving base station would not stop allocating uplink and downlink transmitting resources on the second carrier to the mobile terminal until the serving base station finishes transmitting all data packets buffered (the data packets here refer to all the data packets sent to the serving base station from a serving gateway before the mobile terminal handovers to the target base station, including all the data packets to be sent to the mobile terminal and all the data packets having been sent to the mobile terminal but without acknowledges) or the serving base station sends a handover command on the second carrier or indicates the mobile terminal to release the resource occupied on the second carrier when the serving base station receives a measurement report indicating the communication quality on the second carrier with the target base station is better than that with the serving base station and a handover condition on the second carrier is met. If there are still some data packets buffered in the serving base station, after the serving base station stops transmitting data packets to the mobile terminal on the second carrier, the data packets would be sent to the target base station.

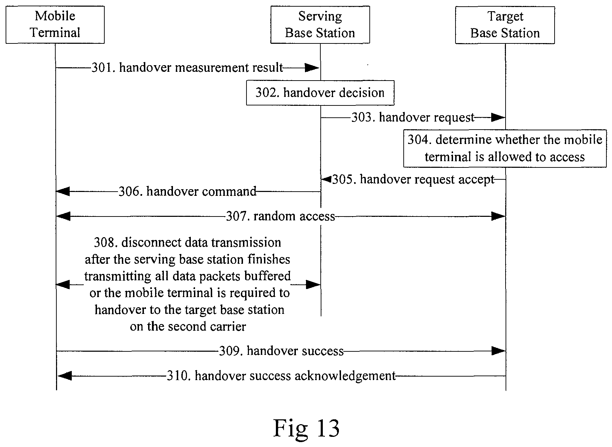

Figure 13 is a flow chart illustrating the handover method according to the embodiment of the present invention. As shown in Figure 13, the handover method according to the present invention mainly includes the following.

Step 301: A mobile terminal measures the RSRP or RSRQ of the base station of an adjacent cell and a serving base station according to measurement configuration from the serving base station, and sends a measurement report containing the handover measurement result to the serving base station if a predetermined condition (also called a handover condition) is met, thus to complete the handover measurement operation.

To be noted, the above predetermined condition refers to the RSRP or RSRQ on the first carrier of an adjacent base station is higher than that of the serving base station, and the RSRP or RSRQ on the second carrier of the adjacent base station is lower than that of the serving base station.

Steps 302-303: The serving base station determines that the mobile terminal is required to perform a handover on the first carrier, selects the adjacent base station as a target base station, and sends a handover request to the selected target base station.

In this step, the serving base station may have the context relationship information of the mobile terminal, e.g. the user identifier and the user service type corresponding to the mobile terminal, carried in the handover request sent to the target base station, so that the target base station determines whether the mobile terminal is allowed to access.

Step 304: The target base station that receives the handover request determines whether the mobile terminal is allowed to access. That is, after receiving the handover request from the serving base station, the target base station may perform an access decision according to access control principles such as service privileges, loads and the like, to determine whether the mobile terminal is allowed to access.

The above steps 301-304 are similar and can be referred to the steps 201-204.

Step 305: After determining that the mobile terminal is allowed to access, the target base station feeds back a handover request accept message carrying the position of the random access resource block on the first carrier to the serving base station.

Step 306: The serving base station allocates the uplink and downlink transmission resource on the second carrier for the mobile terminal according to the channel condition, which includes allocating for the mobile terminal the uplink carrier (the second carrier) and the resource block used by the mobile terminal for its uplink communication with the serving base station, determining resource scheduling information, and sending the resource scheduling information as well as the carrier number of the random access carrier (the first carrier) and the position of the random access resource block to the mobile terminal.

Step 307: After receiving the handover command from the serving base station, the mobile terminal executes the random access process to the target base station using the random access resource block on the first carrier, to obtain the uplink synchronization information of the target base station, and meanwhile keeps the data transmission with the serving base station using the resource allocated in the resource scheduling command.

Step 308: After the serving base station finishes transmitting all data packets buffered or the mobile terminal is required to handover to the target base station on the second carrier, the serving base station stops allocating the uplink and downlink transmission resource for the mobile terminal, so that the mobile terminal disconnects the data transmission with the serving base station.

Steps 309-310: The mobile terminal sends a handover success message to the target base station; and after receiving the handover success message from the mobile terminal, the target base station returns a handover success acknowledgement message to the mobile terminal.

To be noted, although the step 308 is described before step 309 in Figure 13, in actual applications, the execution order of steps 308 and 309 is not restricted, that is, step 309 can be executed before step 308.

It can be seen from the above embodiment, the communication terminating condition of the mobile terminal and the serving base station in the embodiment includes: the serving base station finishing transmitting all data packets for the mobile terminal buffered or the mobile terminal being required to handover to the target base station on the second carrier. Thus the handover interruption time can be greatly reduced and meanwhile the data rate of the mobile terminal can be increased. While the communication terminating condition of the mobile terminal and the serving base station in the previous embodiment is the mobile terminal receives the uplink synchronous information from the target base station. Thus it can be concluded that in the present application, the serving base station would continue allocating uplink and downlink transmitting resources to the mobile terminal until a communication terminating condition is met.

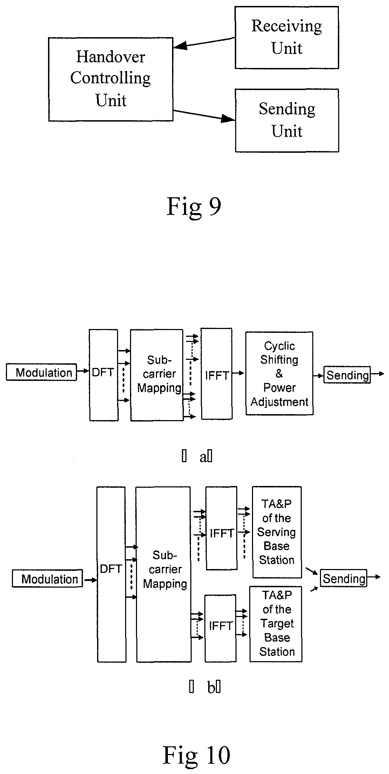

In addition to the handover method, the embodiment of the present invention further provides a mobile terminal for implementing the handover method. Figure 9 illustrates an internal structure of a mobile terminal according to an embodiment of the present invention. As shown in Figure 9, the mobile terminal mainly includes: a receiving unit, a handover controlling unit and a sending unit. Specifically:
the receiving unit is adapted to receive a handover command from a serving base station, and to receive uplink synchronization information from a target base station;
the handover controlling unit is adapted to instruct the sending unit to send a random access preamble to the target base station, and meanwhile send uplink data and signaling to the serving base station, after the receiving unit receives the handover command; and to instruct the sending unit to send the uplink data and signaling to the target base station when a communication terminating condition is met; and
the sending unit is adapted to send the random access preamble to the target base station, and meanwhile send the uplink data and signaling to the serving base station, according to the instruction of the handover controlling unit; or to send the uplink data and signaling to the target base station according to the instruction of the handover controlling unit.

In the above embodiment, the communication terminating condition includes: the receiving unit receiving the uplink synchronization information from the target base station, the serving base station finishing transmitting all data packets for the mobile terminal buffered, or the mobile terminal being required to handover to the target base station on the second carrier.

In the embodiment of the present invention, the handover command from the serving base station includes: a carrier number of a random access carrier and a position of a random access resource block allocated to the mobile terminal for random access with the target base station, and may further includes a random access preamble allocated for the mobile terminal by the target base station.

The receiving unit is further adapted to receive the resource scheduling information from the serving base station, where the resource scheduling information includes: the carrier number of an uplink carrier and the position of a resource block allocated to the mobile terminal for communication with the serving base station; in this case, the handover controlling unit is adapted to instruct the sending unit to send the uplink data and signaling to the serving base station over the uplink carrier and resource block allocated for communication with the serving base station, and send the random access preamble to the target base station over the random access resource block of the random access carrier allocated.

Figure 10(a) and (b) are diagrams illustrating two structures of a sending unit when resource allocation is performed according to Method 1. Specifically, Figure 10(a) shows the case that the data sent to the serving base station and the target base station both use the same Inverse Fast Fourier Transform (IFFT) to perform transformation, and Figure 10(b) shows the case that the data sent to the serving base station and the target base station use different IFFT to perform transformation.

In the sending unit as shown in Figure 10(a), the data sent to the serving base station and the target base station are sent out together after both equally being modulated, performed DFT transformation, sub-carrier mapped, performed IFFT transformation, and cyclic shifted as well as power adjusted based on the target base station and so on. In this case, because the data sent to the serving base station and that to the target base station both use the same IFFT to perform transformation, time adjustment may be performed by performing the same time domain cyclic shift or frequency domain phase shift for all data. For example, when the random access preamble is sent, the signal sent to the serving base station and that sent to the target base station perform the time adjustment both using the timing advance adjustment value TA given by the serving base station. While, after the uplink synchronization information is received, the timing advance adjustment value TA of the two signals are different from each other, the time adjustment may be performed by performing the same time domain cyclic shift or frequency domain phase shift for all data, and it should be ensured that the difference between the shifted signal and the uplink synchronization signal of the serving base station as well as that between the shifted signal and the uplink synchronization signal of the target base station are both within the cyclic prefix range, thus to ensure that the uplink signal can be uplink synchronous with both the serving base station and the target base station. While, the power adjustment is sent according to the power required by the target base station.

In the sending unit as shown in Figure 10(b), the data sent to the serving base station and the target base station are sent out together after both equally being modulated, performed DFT transformation, sub-carrier mapped, and then transformed using different IFFT respectively, and cyclic shifted as well as power adjusted respectively. In this case, because the data sent to the serving base station and that to the target base station use different IFFT to perform transformation, time adjustment and power adjustment of the two signals can be performed separately. For example, when the random access preamble is sent, time and power adjustment is performed for the signal sent to the serving base station according to the value given by the uplink synchronization control and power control of the serving base station, and the signal sent to the target base station may use the highest transmission power, and may use a random timing advance adjustment value TA to perform time adjustment. While, after the uplink synchronization information is received, the timing advance adjustment value TA and the power adjustment value P of the two signals may be adjusted respectively according to the timing advance adjustment value TA and the power adjustment value P given by the uplink synchronization control and power control of the serving base station and the timing advance adjustment value TA and the power adjustment value P contained in the uplink synchronization information of the target base station.

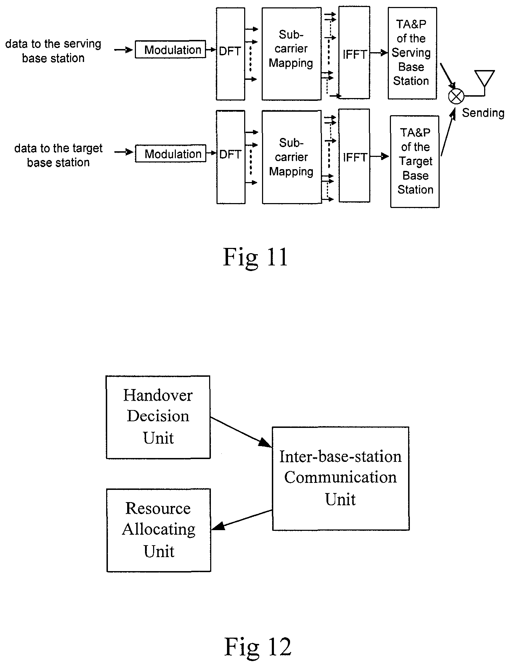

Figure 11 is a diagram illustrating an internal structure of the sending unit when resource allocation is performed according to Method 2. Because in Method 2, the mobile terminal uses different carriers to communicate with the serving base station and the target base station, the signal sent to the serving base station and the target base station may be sent out together after respectively being modulated, performed DFT transformation, sub-carrier mapped, performed IFFT transformation, and cyclic shifted as well as power adjusted and so on. Specifically, the time adjustment and the power adjustment of the two signals sent to the serving base station and the target base station may be carried out separately. For example, when the random access preamble is sent, time and power adjustment is performed for the signal sent to the serving base station according to the value given by the uplink synchronization control and power control of the serving base station, and the signal sent to the target base station may use the highest transmission power, and may use a random timing advance adjustment value TA to perform time adjustment. While, after the uplink synchronization information of the target base station is received, the timing advance adjustment value TA and the power adjustment value P of the two signals may be adjusted respectively according to the timing advance adjustment value TA and the power adjustment value P given by the uplink synchronization control and power control of the serving base station and the timing advance adjustment value TA and the power adjustment value P contained in the uplink synchronization information of the target base station.

The embodiment of the present invention further provides the internal structure of the serving base station. As shown in Figure 12, the serving base station includes:
a handover decision unit, adapted to determine whether it is required to perform a handover according to a handover measurement result received from a mobile terminal, and if yes, to select a target base station;
an inter-base-station communication unit, adapted to send a handover request to the target base station selected by the handover decision unit, and to receive a carrier number of a random access carrier and a position of a random access resource block selected by the target base station; and
a resource allocating unit, adapted to continue allocating an uplink and downlink transmission resource for the mobile terminal when sending a handover command to the mobile terminal, so that the mobile terminal is capable of keeping a data transmission with the serving base station, and meanwhile executes a random access process to the target base station to obtain uplink synchronization information of the target base station; and to stop allocating the uplink and downlink transmission resource for the mobile terminal when a communication terminating condition is met.

In the above embodiment, the communication terminating condition includes: the mobile terminal receiving the uplink synchronization information from the target base station, the serving base station finishing transmitting all data packets for the mobile terminal buffered, or the mobile terminal being required to handover to the target base station on the second carrier.

Specifically, the resource allocating unit can use the resource allocating method provided by the embodiment of the present invention to complete the uplink communication resource allocation for the mobile terminal.

## Claims

1. A handover method, comprising:
continuing, by a serving base station, allocating uplink and downlink transmission resource for a mobile terminal when sending a handover command to the mobile terminal (206, 306) enabling the mobile terminal keep a data communication with the serving base station after receiving the handover command, and meanwhile perform a random access process to a target base station (207, 307) to obtain uplink synchronization information of the target base station;
wherein the mobile terminal performs the random access process to the target base station on a first carrier;
the mobile terminal keeps a data communication with the serving base station on a second carrier;
wherein the method further comprises:
stopping, by the serving base station, allocating the uplink and downlink transmission resource for the mobile terminal on the second carrier when a communication terminating condition is met; and
disconnecting the data communication between the mobile terminal and the serving base station on the second carrier (208);
wherein stopping allocating the uplink and downlink transmission resource for the mobile terminal on the second carrier when a communication terminating condition is met comprises: stopping, by the serving base station, allocating the uplink and downlink transmission resource for the mobile terminal on the second carrier after the mobile terminal obtains the uplink synchronization information of the target base station on the first carrier;
wherein the method further comprises:
receiving, by the serving base station, a handover measurement result reported from the mobile terminal on the second carrier (201, 301);
determining, by the serving base station, a target base station, and sending a handover request to the determined target base station (203, 303), after determining that it is required to perform a handover for the mobile terminal according to the received handover measurement result reported from the mobile terminal (202, 302);
receiving, by the serving base station, a carrier number of the first carrier and a position of a random access resource block fed back from the target base station; and
sending, by the serving base station, to the mobile terminal on the second carrier the carrier number of the first carrier and the position of the random access resource block fed back from the target base station enabling the mobile terminal execute the random access process using the first carrier and the random access resource block fed back from the target base station;
the handover request comprises uplink carrier usage information of the mobile terminal; and the method further comprises:
after receiving the handover request and determining that the mobile terminal is allowed to access (204, 304), selecting, by the target base station, the first carrier for the mobile terminal according to the uplink carrier usage information of the mobile terminal, and feeding back the carrier number of the first carrier and the position of the random access resource block to the serving base station through a handover request accept message (205, 305).

2. The handover method according to claim 1, wherein continuing allocating uplink and downlink transmission resource for a mobile terminal comprises:
allocating, by the serving base station, for the mobile terminal an uplink carrier and a resource block used by the mobile terminal for its uplink communication with the serving base station according to a channel condition, wherein the allocated resource block is different from the random access resource block on the first carrier selected by the target base station; and
sending, by the serving base station, the carrier number of the uplink carrier and the position of the resource block allocated to the mobile terminal for the uplink communication with the serving base station, to the mobile terminal through a resource scheduling command enabling the mobile terminal send uplink data to the serving base station through the uplink carrier and the resource block allocated by the serving base station.

3. The handover method according to claim 2, wherein allocating for the mobile terminal an uplink carrier and a resource block used by the mobile terminal for its uplink communication with the serving base station comprises:
performing, by the serving base station, allocation for a cluster on an uplink carrier other than the first carrier enabling the mobile terminal send a random access preamble to the target base station over the random access resource block of the first carrier, wherein the cluster is multiple continuous resource blocks, and meanwhile send the uplink data or signaling to the serving base station over the allocated cluster of the other uplink carrier.

4. The handover method according to claim 1, wherein selecting the first carrier for the mobile terminal comprises: selecting the carrier on which the number of the resource blocks used by the mobile terminal is least as the first carrier.

5. The handover method according to claim 1, wherein the target base station sends the uplink synchronization information to the mobile terminal through the serving base station, and wherein, the uplink synchronization information comprises: a timing advance adjustment value TA and a power adjustment value P; and
stopping allocating the uplink and downlink transmission resource for the mobile terminal after the mobile terminal obtains the uplink synchronization information of the target base station comprises: stopping, by the serving base station, allocating the uplink and downlink transmission resource for the mobile terminal after receiving and forwarding the uplink synchronization information sent from the target base station to the mobile terminal.

6. The handover method according to claim 1, further comprising: sending, by the target base station, a data resource releasing instruction to the serving base station when sending the uplink synchronization information to the mobile terminal directly or receiving a handover success message sent from the mobile terminal (209, 309) or sending a handover success acknowledgement message to the mobile terminal directly (210, 310);
stopping allocating the uplink and downlink transmission resource for the mobile terminal after the mobile terminal obtains the uplink synchronization information of the target base station comprises: stopping, by the serving base station, allocating the uplink and downlink transmission resource for the mobile terminal after receiving the data resource releasing instruction from the target base station.

7. The handover method according to claim 1, further comprising: receiving and forwarding, by the serving base station, a handover success acknowledgement message sent from the target base station to the mobile terminal, and
stopping allocating the uplink and downlink transmission resource for the mobile terminal after the mobile terminal obtains the uplink synchronization information of the target base station comprises: stopping, by the serving base station, allocating the uplink and downlink transmission resource for the mobile terminal after forwarding the handover success acknowledgement message to the mobile terminal.

8. A handover system, comprising a serving base station, a target base station, and a mobile terminal, wherein the serving base station comprises a handover decision unit, an inter-base-station communication unit, and a resource allocating unit,
the handover decision unit is adapted to determine whether it is required to perform a handover according to a handover measurement result received from a mobile terminal on a second carrier, and if it is required to perform a handover, to select a target base station;
the inter-base-station communication unit is adapted to send a handover request to the target base station selected by the handover decision unit, and to receive a carrier number of a first carrier and a position of a random access resource block selected by the target base station, so that the serving base station sends to the mobile terminal on the second carrier the carrier number of the first carrier and the position of the random access resource block fed back from the target base station enabling the mobile terminal execute the random access process using the first carrier and the random access resource block fed back from the target base station; and
the resource allocating unit is adapted to continue allocating uplink and downlink transmission resource on the second carrier for the mobile terminal when sending a handover command to the mobile terminal, wherein the handover command comprises a carrier number of the first carrier and the position of the random access resource block fed back from the target base station, so that the mobile terminal is capable of keeping a data transmission with the serving base station on the second carrier, and meanwhile executes a random access process to the target base station using the first carrier and the random access resource block fed back from the target base station to obtain uplink synchronization information of the target base station on the first carrier; and to stop allocating the uplink and downlink transmission resource for the mobile terminal when a communication terminating condition is met, and to disconnect the data communication between the mobile terminal and the serving base station on the second carrier; wherein stopping allocating the uplink and downlink transmission resource for the mobile terminal when a communication terminating condition is met comprises: stopping, by the serving base station, allocating the uplink and downlink transmission resource for the mobile terminal after the mobile terminal obtains the uplink synchronization information of the target base station;
the handover request comprises uplink carrier usage information of the mobile terminal; and
the target base station is adapted to after receiving the handover request and determining that the mobile terminal is allowed to access (204, 304), select the first carrier for the mobile terminal according to the uplink carrier usage information of the mobile terminal, and feedback the carrier number of the first carrier and the position of the random access resource block to the serving base station through a handover request accept message (205, 305).

## Patentansprüche

1. Ein Weiterreichverfahren, das folgende Schritte aufweist:
Fortsetzen, durch eine bedienende Basisstation, eines Zuteilens einer Aufwärtsverbindungs- und Abwärtsverbindungs-Übertragungsressource für ein mobiles Endgerät beim Senden eines Weiterreichbefehls an das mobile Endgerät (206, 306), was es dem mobilen Endgerät ermöglicht, eine Datenkommunikation mit der bedienenden Basisstation nach einem Empfangen des Weiterreichbefehls zu halten und unterdessen einen Zufallszugriffsvorgang auf eine Zielbasisstation durchzuführen (207, 307), um Aufwärtsverbindungs-Synchronisationsinformationen der Zielbasisstation zu erhalten;
wobei das mobile Endgerät den Zufallszugriffsvorgang auf die Zielbasisstation auf einem ersten Träger durchführt;
das mobile Endgerät eine Datenkommunikation mit der bedienenden Basisstation auf einem zweiten Träger hält;
wobei das Verfahren ferner Folgendes aufweist:
Stoppen, durch die bedienende Basisstation, des Zuteilens der Aufwärtsverbindungs- und Abwärtsverbindungs-Übertragungsressource für das mobile Endgerät auf dem zweiten Träger, wenn eine Kommunikationsbeendungsbedingung erfüllt ist; und
Trennen der Datenkommunikation zwischen dem mobilen Endgerät und der bedienenden Basisstation auf dem zweiten Träger (208);
wobei das Stoppen des Zuteilens der Aufwärtsverbindungs- und Abwärtsverbindungs-Übertragungsressource für das mobile Endgerät auf dem zweiten Träger, wenn eine Kommunikationsbeendungsbedingung erfüllt ist, Folgendes aufweist: Stoppen, durch die bedienende Basisstation, des Zuteilens der Aufwärtsverbindungs- und Abwärtsverbindung-Übertragungsressource für das mobile Endgerät auf dem zweiten Träger, nachdem das mobile Endgerät die Aufwärtsverbindungs-Synchronisationsinformationen der Zielbasisstation auf dem ersten Träger erhält;
wobei das Verfahren ferner Folgendes aufweist:
Empfangen, durch die bedienende Basisstation, eines Weiterreichmessergebnisses, das von dem mobilen Endgerät auf dem zweiten Träger berichtet wird (201, 301);
Bestimmen, durch die bedienende Basisstation, einer Zielbasisstation und Senden einer Weiterreichanforderung an die bestimmte Zielbasisstation (203, 303) nach einem Bestimmen, dass ein Weiterreichen für das mobile Endgerät erforderlich ist, gemäß dem empfangenen Weiterreichmessergebnis, das von dem mobilen Endgerät berichtet wird (203, 302);
Empfangen, durch die bedienende Basisstation, einer Trägerzahl des ersten Trägers und einer Position eines Zufallszugriffsressourcenblocks, die von der Zielbasisstation zurückgeleitet werden; und
Senden, durch die bedienende Basisstation, der Trägerzahl des ersten Trägers und der Position des Zufallszugriffsressourcenblocks, die von der Zielbasisstation zurückgeleitet werden, auf dem zweiten Träger an das mobile Endgerät, was es dem mobilen Endgerät ermöglicht, den Zufallszugriffsvorgang unter Verwendung des ersten Trägers und des Zufallszugriffsressourcenblocks auszuführen, die von der Zielbasisstation zurückgeleitet werden;
wobei die Weiterreichanforderung Aufwärtsverbindungs-Trägernutzungsinformationen des mobilen Endgeräts aufweist; und wobei das Verfahren ferner Folgendes aufweist:
nach dem Empfangen der Weiterreichanforderung und Bestimmen, dass das mobile Endgerät zugreifen darf (204, 304), Auswählen, durch die Zielbasisstation, des ersten Trägers für das mobile Endgerät gemäß den Aufwärtsverbindungs-Trägernutzungsinformationen des mobilen Endgeräts und Zurückleiten der Trägerzahl des ersten Trägers und der Position des Zufallszugriffsressourcenblocks durch eine Weiterreichanforderung-Annahmenachricht an die bedienende Basisstation (205, 305).

2. Das Weiterreichverfahren gemäß Anspruch 1, bei dem das Fortsetzen des Zuteilens der Aufwärtsverbindungs- und Abwärtsverbindungs-Übertragungsressource für ein mobiles Endgerät Folgendes aufweist:
Zuteilen, durch die bedienende Basisstation, eines Aufwärtsverbindungsträgers und eines Ressourcenblocks, der durch das mobile Endgerät für seine Aufwärtsverbindungskommunikation mit der bedienenden Basisstation verwendet wird, gemäß einer Kanalbedingung für das mobile Endgerät, wobei sich der zugeteilte Ressourcenblock von dem Zufallszugriffsressourcenblock auf dem ersten Träger unterscheidet, der durch die Zielbasisstation ausgewählt wird; und
Senden, durch die bedienende Basisstation, der Trägerzahl des Aufwärtsverbindungsträgers und der Position des Ressourcenblocks, der dem mobilen Endgerät für die Aufwärtsverbindungskommunikation mit der bedienenden Basisstation zugeteilt wird, durch einen Ressourcenplanungsbefehl an das mobile Endgerät, was es dem mobilen Endgerät ermöglicht, Aufwärtsverbindungsdaten durch den Aufwärtsverbindungsträger und den Ressourcenblock, der durch die bedienende Basisstation zugeteilt wird, an die bedienende Basisstation zu senden.

3. Das Weiterreichverfahren gemäß Anspruch 2, bei dem das Zuteilen, für das mobile Endgerät, eines Aufwärtsverbindungsträgers und eines Ressourcenblocks, der durch das mobile Endgerät für seine Aufwärtsverbindungskommunikation mit der bedienenden Basisstation verwendet wird, Folgendes aufweist:
Durchführen, durch die bedienende Basisstation, einer Zuteilung für ein Cluster auf einem anderen Aufwärtsverbindungsträger als dem ersten Träger, was es dem mobilen Endgerät ermöglicht, einen Zufallszugriffvorspann über den Zufallszugriffsressourcenblock des ersten Trägers an die Zielbasisstation zu senden, wobei das Cluster mehrere zusammenhängende Ressourcenblöcke ist, unterdessen die Aufwärtsverbindungsdaten oder eine Signalisierung über den zugeteilten Cluster des anderen Aufwärtsverbindungsträgers an die bedienende Basisstation zu senden.

4. Das Weiterreichverfahren gemäß Anspruch 1, bei dem das Auswählen des ersten Trägers für das mobile Endgerät Folgendes aufweist: Auswählen des Trägers, auf dem die Zahl der Ressourcenblöcke, die durch das mobile Endgerät verwendet werden, am kleinsten ist, als den ersten Träger.

5. Das Weiterreichverfahren gemäß Anspruch 1, bei dem die Zielbasisstation die Aufwärtsverbindungs-Synchronisationsinformationen durch die bedienende Basisstation an das mobile Endgerät sendet, und bei dem die Aufwärtsverbindungs-Synchronisationsinformationen Folgendes aufweisen: einen Zeitgebungsfortschritt-Einstellwert TA und einen Leistungseinstellwert P; und
wobei das Stoppen des Zuteilens der Aufwärtsverbindungs- und Abwärtsverbindungs-Übertragungsressource für das mobile Endgerät, nachdem das mobile Endgerät die Aufwärtsverbindungs-Synchronisationsinformationen der Zielbasisstation erhält, Folgendes aufweist: Stoppen, durch die bedienende Basisstation, des Zuteilens der Aufwärtsverbindungs- und Abwärtsverbindungs-Übertragungsressource für das mobile Endgerät nach dem Empfangen und Weiterleiten der Aufwärtsverbindungs-Synchronisationsinformationen, die von der Zielbasisstation an das mobile Endgerät gesendet werden.

6. Das Weiterreichverfahren gemäß Anspruch 1, das ferner Folgendes aufweist: Senden, durch die Zielbasisstation, einer Datenressourcenfreigabeanweisung an die bedienende Basisstation, wenn die Aufwärtsverbindungs-Synchronisationsinformationen direkt an das mobile Endgerät gesendet werden oder eine Weiterreich-Erfolg-Nachricht, die von dem mobilen Endgerät gesendet wird, empfangen wird (209, 309) oder eine Weiterreich-Erfolg-Bestätigungsnachricht direkt an das mobile Endgerät gesendet wird (210, 310);
wobei das Stoppen des Zuteilens der Aufwärtsverbindungs- und Abwärtsverbindungs-Übertragungsressource für das mobile Endgerät, nachdem das mobile Endgerät die Aufwärtsverbindungs-Synchronisationsinformationen der Zielbasisstation erhält, Folgendes aufweist: Stoppen, durch die bedienende Basisstation, des Zuteilens der Aufwärtsverbindungs- und Abwärtsverbindungs-Übertragungsressource für das mobile Endgerät nach einem Empfangen der Datenressourcenfreigabeanweisung von der Zielbasisstation.

7. Das Weiterreichverfahren gemäß Anspruch 1, das ferner Folgendes aufweist: Empfangen und Weiterleiten, durch die bedienende Basisstation, einer Weiterreich-Erfolg-Bestätigungsnachricht, die von der Zielbasisstation an das mobile Endgerät gesendet wird, und
wobei das Stoppen des Zuteilens der Aufwärtsverbindungs- und Abwärtsverbindungs-Übertragungsressource für das mobile Endgerät, nachdem das mobile Endgerät die Aufwärtsverbindungs-Synchronisationsinformationen der Zielbasisstation erhält, Folgendes aufweist: Stoppen, durch die bedienende Basisstation, des Zuteilens der Aufwärtsverbindungs- und Abwärtsverbindungs-Übertragungsressource für das mobile Endgerät nach dem Weiterleiten der Weiterreich-Erfolg-Bestätigungsnachricht an das mobile Endgerät.

8. Ein Weiterreichsystem, das eine bedienende Basisstation, eine Zielbasisstation und ein mobiles Endgerät aufweist, wobei die bedienende Basisstation eine Weiterreichentscheidungseinheit, eine Inter-Basisstation-Kommunikationseinheit und eine Ressourcenzuteilungseinheit aufweist,
wobei die Weiterreichentscheidungseinheit angepasst ist, um zu bestimmen, ob ein Weiterreichen durchgeführt werden muss, gemäß einem Weiterreichmessergebnis, das von einem mobilen Endgerät auf einem zweiten Träger empfangen wird, und wenn ein Weiterreichen durchgeführt werden muss, eine Zielbasisstation auszuwählen;
wobei die Inter-Basisstation-Kommunikationseinheit angepasst ist, um eine Weiterreichanforderung an die Zielbasisstation zu senden, die durch die Weiterreichentscheidungseinheit ausgewählt ist, und eine Trägerzahl eines ersten Trägers und eine Position eines Zufallszugriffsressourcenblocks zu empfangen, der durch die Zielbasisstation ausgewählt ist, so dass die bedienende Basisstation an das mobile Endgerät auf dem zweiten Träger die Trägerzahl des ersten Trägers und die Position des Zufallszugriffsressourcenblocks sendet, die von der Zielbasisstation zurückgeleitet werden, was es dem mobilen Endgerät ermöglicht, den Zufallszugriffsvorgang unter Verwendung des ersten Trägers und des Zufallszugriffsressourcenblocks auszuführen, die von der Zielbasisstation zurückgeleitet werden; und
wobei die Ressourcenzuteilungseinheit angepasst ist, um ein Zuteilen einer Aufwärtsverbindungs- und Abwärtsverbindungs-Übertragungsressource auf dem zweiten Träger für das mobile Endgerät fortzusetzen, wenn ein Weiterreichbefehl an das mobile Endgerät gesendet wird, wobei der Weiterreichbefehl eine Trägerzahl des ersten Trägers und die Position des Zufallszugriffsressourcenblocks aufweist, die von der Zielbasisstation zurückgeleitet werden, so dass das mobile Endgerät in der Lage ist, eine Datenübertragung mit der bedienenden Basisstation auf dem zweiten Träger zu halten und unterdessen einen Zufallszugriffsvorgang auf die Zielbasisstation unter Verwendung des ersten Trägers und des Zufallszugriffsressourcenblocks ausführt, die von der Zielbasisstation zurückgeleitet werden, um Aufwärtsverbindungs-Synchronisationsinformationen der Zielbasisstation auf dem ersten Träger zu erhalten; und um das Zuteilen der Aufwärtsverbindungs- und AbwärtsverbindungsÜbertragungsressource für das mobile Endgerät zu stoppen, wenn eine Kommunikationsbeendungsbedingung erfüllt ist, und um die Datenkommunikation zwischen dem mobilen Endgerät und der bedienenden Basisstation auf dem zweiten Träger zu trennen; wobei das Stoppen des Zuteilens der Aufwärtsverbindungs- und Abwärtsverbindungs-Übertragungsressource für das mobile Endgerät, wenn eine Kommunikationsbeendungsbedingung erfüllt ist, Folgendes aufweist: Stoppen, durch die bedienende Basisstation, des Zuteilens der Aufwärtsverbindungs- und Abwärtsverbindungs-Übertragungsressource für das mobile Endgerät, nachdem das mobile Endgerät die Aufwärtsverbindungs-Synchronisationsinformationen der Zielbasisstation erhält;
wobei die Weiterreichanforderung Aufwärtsverbindungs-Trägernutzungsinformationen des mobilen Endgeräts aufweist; und
die Zielbasisstation angepasst ist, um nach dem Empfangen der Weiterreichanforderung und dem Bestimmen, dass das mobile Endgerät zugreifen darf (204, 304), den ersten Träger für das mobile Endgerät gemäß den AufwärtsverbindungsTrägernutzungsinformationen des mobilen Endgeräts auszuwählen und die Trägerzahl des ersten Trägers und die Position des Zufallszugriffsressourcenblocks durch eine Weiterreich-Anforderung-Annahmenachricht an die bedienende Basisstation zurückzuleiten (205, 305).

## Revendications

1. Procédé de transfert, comprenant le fait de:
continuer, par une station de base de desserte, à attribuer une ressource de transmission de liaison montante et de liaison descendante pour un terminal mobile lors de l'envoi d'une commande de transfert au terminal mobile (206, 306) permettant au terminal mobile de maintenir une communication de données avec la station de base de desserte après réception de la commande de transfert et entretemps d'effectuer un processus d'accès aléatoire à une station de base cible (207, 307) pour obtenir des informations de synchronisation de liaison montante de la station de base cible;
dans lequel le terminal mobile effectue le processus d'accès aléatoire à la station de base cible sur une première porteuse;
le terminal mobile maintient une communication de données avec la station de base de desserte sur une deuxième porteuse;
dans lequel le procédé comprend par ailleurs le fait de:
arrêter, par la station de base de desserte, d'attribuer la ressource de transmission de liaison descendante et de liaison montante pour le terminal mobile sur la deuxième porteuse de communication quand une condition de terminaison de communication est remplie; et
déconnecter la communication de données entre le terminal mobile et la station de base de desserte sur la deuxième porteuse (208);
dans lequel le fait d'arrêter d'attribuer la ressource de transmission de liaison montante et de liaison descendante pour le terminal mobile sur la deuxième porteuse quand une condition de terminaison de communication est remplie comprend le fait de: arrêter, par la station de base de desserte, d'attribuer la ressource de transmission de liaison montante et de liaison descendante pour le terminal mobile sur la deuxième porteuse après que le terminal mobile ait obtenu les informations de synchronisation de liaison montante de la station de base cible sur la première porteuse;
dans lequel le procédé comprend par ailleurs le fait de:
recevoir, par la station de base de desserte, un résultat de mesure de transfert rapporté depuis le terminal mobile sur la deuxième porteuse (201, 301);
déterminer, par la station de base de desserte, une station de base cible, et envoyer une demande de transfert à la station de base cible déterminée (203, 303), après avoir déterminé qu'il est requis d'effectuer un transfert pour le terminal mobile en fonction du résultat de mesure de transfert reçu rapporté depuis le terminal mobile (202, 302);
recevoir, par la station de base de desserte, un numéro de porteuse de la première porteuse et une position d'un bloc de ressources d'accès aléatoire rétro-alimentés depuis la station de base cible; et
envoyer, par la station de base de desserte, au terminal mobile sur la deuxième porteuse le numéro de porteuse de la première porteuse et la position du bloc de ressources d'accès aléatoire rétro-alimentés depuis la station de base cible permettant au terminal mobile d'exécuter le processus d'accès aléatoire à l'aide de la première porteuse et du bloc de ressources d'accès aléatoire rétro-alimentés depuis la station de base cible;
la demande de transfert comprend des informations d'utilisation de porteuse de liaison montante du terminal mobile; et le procédé comprend par ailleurs le fait de:
après avoir reçu la demande de transfert et déterminé que le terminal mobile est autorisé à accéder (204, 304), sélectionner, par la station de base cible, la première porteuse pour le terminal mobile en fonction des informations d'utilisation de la porteuse de liaison montante du terminal mobile, et rétro-alimenter le numéro de porteuse de la première porteuse et la position du bloc de ressources d'accès aléatoire vers la station de base de desserte au moyen d'un message d'acceptation de demande de transfert (205, 305).

2. Procédé de transfert selon la revendication 1, dans lequel le fait de continuer à attribuer une ressource de transmission de liaison montante et de liaison descendante pour un terminal mobile comprend le fait de:
attribuer, par la station de base de desserte, pour le terminal mobile une porteuse de liaison montante et un bloc de ressources utilisés par le terminal mobile pour sa communication de liaison montante avec la station de base de desserte selon une condition de canal, où le bloc de ressources attribué est différent du bloc de ressources d'accès aléatoire sur la première porteuse sélectionnée par la station de base cible; et
envoyer, par la station de base de desserte, le numéro de porteuse de la porteuse de liaison montante et la position du bloc de ressources attribués au terminal mobile pour la communication de liaison montante avec la station de base de desserte, au terminal mobile au moyen d'une commande de planification de ressource permettant au terminal mobile d'envoyer des données de liaison montante à la station de base de desserte par l'intermédiaire de la porteuse de liaison montante et du bloc de ressources attribués par la station de base de desserte.

3. Procédé de transfert selon la revendication 2, dans lequel l'attribution pour le terminal mobile d'une porteuse de liaison montante et d'un bloc de ressources utilisés par le terminal mobile pour sa communication de liaison montante avec la station de base de desserte comprend le fait de:
effectuer, par la station de base de desserte, l'attribution pour un groupe sur une porteuse de liaison montante autre que la première porteuse permettant au terminal mobile d'envoyer un préambule d'accès aléatoire à la station de base cible sur le bloc de ressources d'accès aléatoire de la première porteuse, où le groupe est formé par des blocs de ressources continus multiples, et d'envoyer entretemps les données de liaison montante ou de signaler à la station de base de desserte sur le groupe attribué de l'autre porteuse de liaison montante.

4. Procédé de transfert selon la revendication 1, dans lequel le fait de sélectionner la première porteuse pour le terminal mobile comprend le fait de: sélectionner la porteuse sur laquelle le nombre de blocs de ressources utilisés par le terminal mobile est inférieur à celui de la première porteuse.

5. Procédé de transfert selon la revendication 1, dans lequel la station de base cible envoie les informations de synchronisation de liaison montante au terminal mobile à travers la station de base de desserte, et dans lequel les informations de synchronisation de liaison montante comprennent: une valeur de réglage d'avance temporelle TA, et une valeur de réglage de puissance P; et
le fait d'arrêter d'attribuer la ressource de transmission de liaison montante et de liaison descendante pour le terminal mobile après que le terminal mobile ait obtenu les informations de synchronisation de liaison montante de la station de base cible comprend le fait de: arrêter, par la station de base de desserte, d'attribuer la ressource de transmission de liaison montante et de liaison descendante pour le terminal mobile après réception et envoi des informations de synchronisation de liaison montante envoyées de la station de base cible au terminal mobile.

6. Procédé de transfert selon la revendication 1, comprenant par ailleurs le fait de: envoyer, par la station de base cible, une instruction de libération de ressource de données à la station de base de desserte lors de l'envoi direct des informations de synchronisation de liaison montante au terminal mobile ou recevoir un message de transfert réussi envoyé par le terminal mobile (209, 309) ou envoyer directement un message de confirmation de transfert réussi au terminal mobile (210, 310);
le fait d'arrêter d'attribuer la ressource de transmission de liaison montante et de liaison descendante pour le terminal mobile après que le terminal mobile ait obtenu les informations de synchronisation de liaison montante de la station de base cible comprend le fait de: arrêter, par la station de base de desserte, d'attribuer la ressource de transmission de liaison montante et de liaison descendante pour le terminal mobile après réception de l'instruction de libération de la ressource de données de la station de base cible.

7. Procédé de transfert selon la revendication 1, comprenant par ailleurs le fait de: recevoir et envoyer, par la station de base de desserte, un message de confirmation de transfert réussi envoyé de la station de base cible au terminal mobile, et
le fait d'arrêter d'attribuer la ressource de transmission de liaison montante et de liaison descendante pour le terminal mobile après que le terminal mobile ait obtenu les informations de synchronisation de liaison montante de la station de base cible comprend le fait de: arrêter, par la station de base de desserte, d'attribuer la ressource de transmission de liaison montante et de liaison descendante pour le terminal mobile après l'envoi du message de confirmation de transfert réussi au terminal mobile.

8. Système de transfert, comprenant une station de base de desserte et une station de base cible et un terminal mobile, dans lequel la station de base de desserte comprend une unité de décision de transfert, une unité de communication entre stations de base, et une unité d'attribution de ressource,
l'unité de décision de transfert est adaptée pour déterminer s'il est nécessaire d'effectuer un transfert en fonction d'un résultat de mesure de transfert reçu d'un terminal mobile sur une deuxième porteuse et, s'il est nécessaire d'effectuer un transfert, pour sélectionner une station de base cible;
l'unité de communication entre stations de base est adaptée pour envoyer une demande de transfert à la station de base cible sélectionnée par l'unité de décision de transfert, et pour recevoir un numéro de porteuse d'une première porteuse et une position d'un bloc de ressources d'accès aléatoire sélectionné par la station de base cible, de sorte que la station de base de desserte envoie au terminal mobile sur la deuxième porteuse le numéro de porteuse de la première porteuse et la position du bloc de ressources d'accès aléatoire rétro-alimentés depuis la station de base cible permettant au terminal mobile d'exécuter le processus d'accès aléatoire à l'aide de la première porteuse et du bloc de ressources d'accès aléatoire rétro-alimentés depuis la station de base cible; et
l'unité d'attribution de ressource est adaptée pour continuer à attribuer la ressource de transmission de liaison montante et de liaison descendante sur la deuxième porteuse pour le terminal mobile lors de l'envoi d'une commande de transfert au terminal mobile, où la commande de transfert comprend un numéro de porteuse de la première porteuse et la position du bloc de ressources d'accès aléatoire rétro-alimentés depuis la station de base cible, de sorte que le terminal mobile soit à même de maintenir une transmission de données avec la station de base de desserte sur la deuxième porteuse, et exécute entretemps un processus d'accès aléatoire à la station de base cible à l'aide de la première porteuse et du bloc de ressources d'accès aléatoire rétro-alimentés depuis la station de base cible pour obtenir des informations de synchronisation de liaison montante de la station de base cible sur la première porteuse; et pour arrêter d'attribuer la ressource de transmission de liaison montante et de liaison descendante pour le terminal mobile quand une condition de terminaison de communication est remplie, et pour déconnecter la communication de données entre le terminal mobile et la station de base de desserte sur la deuxième porteuse; où le fait d'arrêter d'attribuer la ressource de transmission de liaison montante et de liaison descendante pour le terminal mobile lorsque la condition de terminaison de communication est remplie comprend le fait de: arrêter, par la station de base de desserte, d'attribuer la ressource de transmission de liaison montante et de liaison descendante pour le terminal mobile après que le terminal mobile ait obtenu les informations de synchronisation de liaison montante de la station de base cible;
la demande de transfert comprend des informations d'utilisation de porteuse de liaison montante du terminal mobile; et
la station de base cible est adaptée pour sélectionner, après avoir reçu la demande de transfert et déterminé que le terminal mobile est autorisé à accéder (204, 304), la première porteuse pour le terminal mobile en fonction des informations d'utilisation de porteuse de liaison montante du terminal mobile, et rétro-alimenter le numéro de porteuse de la première porteuse et la position du bloc de ressources d'accès aléatoire vers la station de base de desserte par l'intermédiaire d'un message d'acceptation de demande de transfert (205, 305).
